Europäisches Patentamt

European Patent Office

Office européen des brevets

(11) Publication number: 0 488 387 A1

## EUROPEAN PATENT APPLICATION

(21) Application number: 91120564.9

(22) Date of filing: 29.11.91

(51) Int. Cl.5: G11B 23/087

(30) Priority: 30.11.90 JP 338011/90
07.05.91 JP 132079/91
22.05.91 JP 117271/91

(43) Date of publication of application:
03.06.92 Bulletin 92/23

(84) Designated Contracting States:
DE FR GB

(71) Applicant: MATSUSHITA ELECTRIC
INDUSTRIAL CO., LTD.
1006, Oaza Kadoma
Kadoma-shi, Osaka-fu, 571(JP)

(72) Inventor: Utsumi, Matsuo
65-55, Hashimoto-kurigatani
Yawata-shi, Kyoto(JP)
Inventor: Zaitsu, Osamu
34-4, Ishizunaka-machi
Neyagawa-shi, Osaka(JP)
Inventor: Okuda, Makoto
2-18-20 Kuzuhaoka
Hirakata-shi, Osaka(JP)
Inventor: Kajino, Jiro
3-20, Uzumasanaka-machi
Neyagawa-shi, Osaka(JP)

(74) Representative: Schwabe - Sandmair - Marx
Stuntzstrasse 16
W-8000 München 80(DE)

(54) A tape cassette.

(57) A tape cassette which includes tape reels in the housing, each tape reel including a reel hub for carrying a magnetic tape, the reel hub having an engaging means for engagement with a driving means when the cassette is placed in the apparatus, and a reel locking member disposed in the reel hub, the housing including a support means for supporting the reel locking member in a non-rotatable but vertically slidable manner, the reel locking member being loaded downward, and an engaging means provided in the reel locking member so as to place the reel locking member into engagement with the reel hub.

Fig. 1

## BACKGROUND OF THE INVENTION

### 1. Field of the Invention:

The present invention relates to a tape cassette used for a magnetic recording/reproducing apparatus such as a video tape recording apparatus. Hereinafter, a tape cassette will be referred to as the "cassette", the magnetic tape as the "tape", and the magnetic recording/reproducing apparatus as the "apparatus".

### 2. Description of the Prior Art:

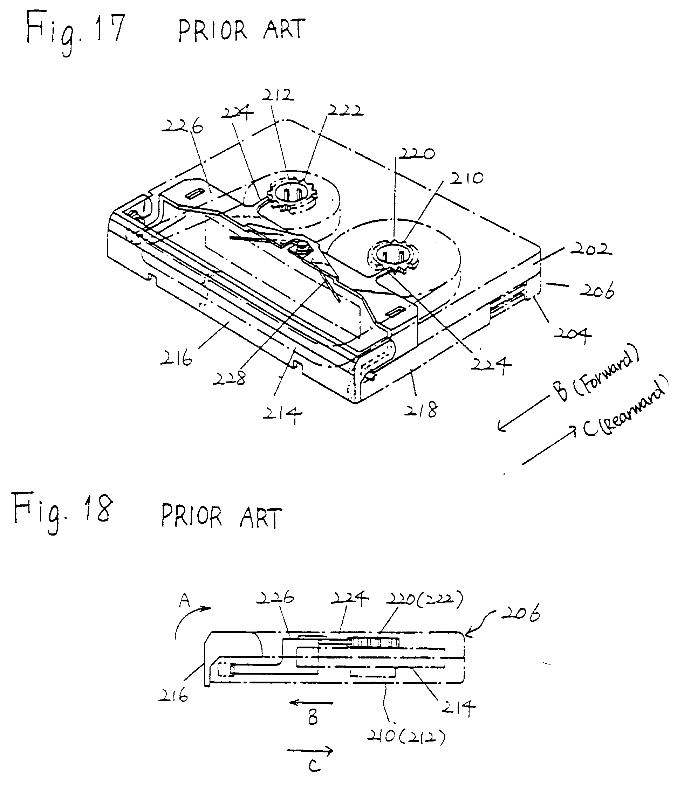

A cassette used in a digital audio tape recorder is provided with a suitable means for preventing the tape from becoming slackened. An example of the known cassettes of such a kind is disclosed in Japanese Laid-Open Utility Model Publication No. 60-80574, which will be described by reference to Figures 17 and 18:

Referring to Figures 17 and 18, the cassette has a housing 206 which includes an upper portion 202 and a lower portion 204. The housing 206 houses a first reel 210 and a second reel 212 on which a tape 214 is carried so as to be able to run from one to the other. The tape 214 is passed through apertures in the front of the housing 206 in a stretched state. The housing 206 includes a front cover 216 rotatable in the direction of arrow A and a slider 218 slidable along the side portions of the housing 206 in the directions of arrows B (forward) and C (rearward). The slider 218 is normally loaded forwardly by a spring (not shown). When the cassette is placed in the apparatus, the slider 218 is caused to slide rearwardly, that is, in the direction of arrow C, thereby rotating the front cover 216 upwardly, that is, in the direction of arrow A. Throughout this specification, "rearward" means the direction toward the operator standing in front of the apparatus, and "forward" means the direction away from the operator. In this way the front opening of the housing 206 is opened in which the stretched tape 214 is exposed to the outside.

The first reel 210 and the second reel 212 are respectively provided with flat gears 220 and 222 at their top ends. The reference numeral 226 denotes a locking slider having a pair of pawls 224 engageable with the flat gears 220 and 222. The locking slider 226 is slidable along the side portions of the housing 206 in the directions of arrows g and C, and normally loaded rearwardly by a spring 228 where the pawls 224 stop the reels 210 and 212 from rotation by engagement with the gears 220 and 222. The locking slider 226 is moved in the direction of arrow B (forward) against the spring 89 in accordance with the clockwise rotation of the front cover in the direction of arrow A in Figure 18, thereby releasing the pawls 224 from the gears 220 and 222, and enabling the reels 210 and 212 to rotate.

Under this structure, the cassette tends to be large in size because the locking slider 226 and the gears 220 and 222 must be mounted above the tape reels 210 and 212 in the housing 206. The increased height of the cassette requires a relatively large apparatus having a sufficient space for accommodating such a cassette.

## SUMMARY OF THE INVENTION

The tape cassette of this invention, which overcomes the above-discussed and numerous other disadvantages and deficiencies of the prior art, comprises a housing, a pair of tape reels housed in the housing, each tape reel comprising a reel hub for carrying a magnetic tape, the reel hub having an engaging means for engagement with a driving means when the cassette is placed in the apparatus, and a reel locking member disposed in the reel hub, wherein the housing comprises a support means for supporting the reel locking member in a non-rotatable but vertically slidable manner, a loading means for loading the reel locking member downward, and an engaging means disposed in the reel locking member so as to place the reel locking member into engagement with the reel hub.

In a preferred embodiment, the engaging means of the reel hub comprises a plurality of equally spaced pawls projected inward from the periphery of the reel hub, and wherein the engaging means comprises an engager insertable into gaps between the adjacent pawls.

In a preferred embodiment, the support means comprises a cylindrical body having a flange inwardly extended from the inner side wall thereof and wherein the reel locking member comprises a plurality of broken parts formed so as to allow a post formed in the reel locking member, thereby preventing the rotation of the reel locking member but allowing the vertical movement thereof.

In a preferred embodiment, the loading means comprises a coil spring disposed between the top surface of the housing and the reel locking member.

In a preferred embodiment, each of the reel hubs comprises an inner ring-shaped body and a second inner ring-shaped body, and a top portion in opposition to the reel locking member.

In a preferred embodiment, the engaging means comprises a first group of gears formed on the reel hub and a second group of gears formed on the reel locking member, the first group of gears and the second group of gears being mutually engageable.

In a preferred embodiment, the gears of the first and second groups are bevel gears having inclined faces.

In a preferred embodiment, wherein the gears comprise saw-shaped teeth, each tooth including an inclined face and a vertical engaging face so that when they are in mesh, the reel hubs being rotated only in one direction.

In a preferred embodiment, the reel locking member comprises a central bore having a polygonal cross-section and wherein the support means comprises a shaft having a polygonal cross-section corresponding to that of the central bore of the reel locking member so as to enable the shaft to fit in the central bore in a non-rotatable but vertically slidable manner.

In a preferred embodiment, the loading means is a leaf spring disposed between the top surface of the housing and the reel locking member.

In a preferred embodiment, the reel hub comprises a ring-shaped groove in the top surface thereof, and the reel locking member comprises an engaging rib adapted to fit in the ring-shaped groove, and wherein the engaging means comprises an inclined face engageable with the ring-shaped groove, the engaging rib comprising an inclined face engageable with the inclined face of the engaging means.

In a preferred embodiment, the engaging means comprises a first gear portion disposed in the ring-shaped groove, and a second gear portion disposed in the reel locking member so as to be in mesh with each other.

In a preferred embodiment, the gear portion in the ring-shaped groove is formed on an inclined bottom thereof.

In a preferred embodiment, each of the gears comprises a saw-shaped tooth, each tooth having an inclined face and an upright engaging face, the meshing of the gear faces ensuring the rotation of the reel hubs only in one direction.

In a preferred embodiment, the support means comprises a plurality of supporting arms upright on the top surface of the housing, and a plurality of ring-shaped support horizontally secured to the respective supporting arms, and wherein the reel locking member comprises bores for allowing the supporting arms to pass through and a trunk portion adapted to enter an opening of the ring-shaped support.

In a preferred embodiment, the reel locking member comprises two portions divided in the peripheral direction in opposition to the top surface of the reel hub.

In a preferred embodiment, the engaging means comprises a ring-shaped gear formed on the top surface of the reel hub, and gears formed on each of the divided portions of the reel locking member.

In a preferred embodiment, the divided portions of the reel locking member are located between the adjacent supporting arms so as to prevent the reel locking member from rotation.

In a preferred embodiment, the housing comprises an opening on the top surface through which the divided portions are passed at one time.

In a preferred embodiment, the opening on the top surface of the housing is covered by a cover.

In a preferred embodiment, the gears comprise saw-shaped teeth, each tooth including an inclined face and an upright face, and the meshing of the gears ensures that the reel hubs are rotated only in one direction.

Thus, the invention described herein makes possible the objective of providing a tape cassette capable of constantly keeping the tape in a stretched state without requiring a large space for accommodating a loose preventing device, thereby achieving a thin-type, compact magnetic recording/reproducing apparatus.

## BRIEF DESCRIPTION OF THE DRAWINGS

This invention may be better understood and its numerous objects and advantages will become apparent to those skilled in the art by reference to the accompanying drawings as follows:

Figure 1 is a cross-sectional side view showing a first example of the tape cassette according to the invention, wherein the cassette is placed in the apparatus;

Figure 2 is a cross-sectional side view showing the cassette of Figure 1;

Figure 3 is an exploded perspective view of a main portion of the tape cassette of Figure 1;

Figure 4 is a plan view on an enlarged scale showing a reel hub used in the cassette of Figure 1;

Figure 5 is a cross-sectional side view showing a second example of the cassette according to the invention;

Figure 6 is an exploded perspective view showing a main portion of the cassette of Figure 5;

Figure 7 is a cross-sectional side view showing the cassette of Figure 6, wherein it is placed in the apparatus;

Figure 8 is a perspective view showing the reel locking member used in the cassette of Figure 5;

Figure 9 is a cross-sectional side view showing a third example of the cassette according to the invention;

Figure 10 is an exploded perspective view showing a main portion of the cassette of Figure 9;

Figures 11A and 11B are cross-sectional side views exemplifying the operation of the cassette of Figure 9, wherein Figure 11A shows the cassette before it is placed in the apparatus, and Figure 11B shows the cassette placed in the apparatus.

Figures 12A and 12B are respectively cross-sectional side view showing a modified version of the third example of Figure 9, and a cross-sectional side view showing the cassette placed in the apparatus;

Figure 13 is a perspective view showing a reel locking member used in the cassette of Figure 12A, when viewed from the bottom;

Figure 14 is a cross-sectional side view showing another modified version of the third example of Figure 9;

Figure 15 is an exploded perspective view showing the main portion of a fourth example of the cassette according to the present invention;

Figures 16A and 16B are cross-sectional views showing the cassette of Figure 15, wherein Figure 16A shows the cassette before it is placed in the apparatus, and Figure 16B shows the cassette placed in the apparatus;

Figure 17 is a perspective view showing a conventional digital audio tape cassette; and

Figure 18 is a schematic side view showing the cassette of Figure 17.

## DESCRIPTION OF THE PREFERRED EMBODIMENTS

Example 1

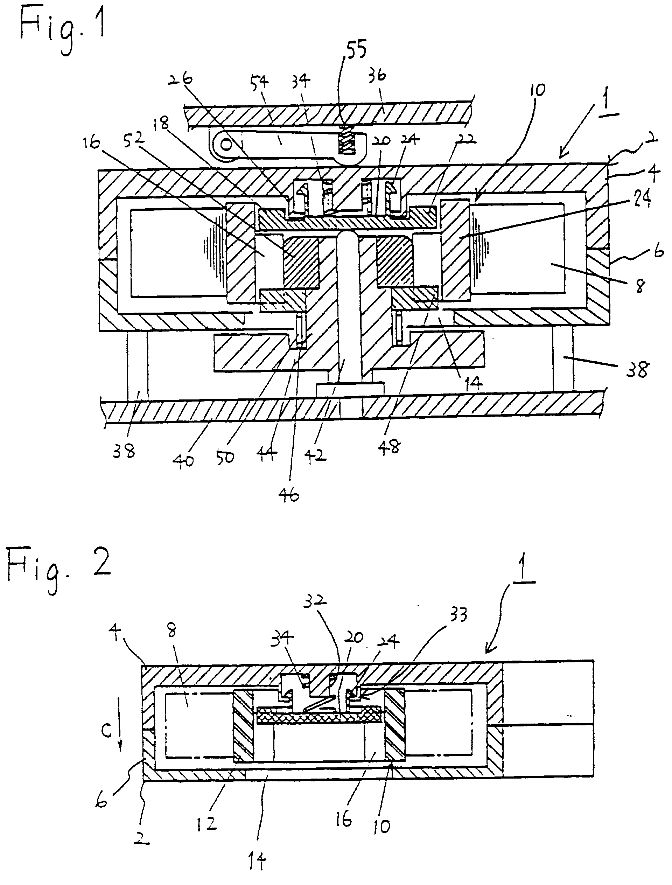

Referring to Figures 1 and 2, the cassette 1 has a housing 2 composed of an upper portion 4 and a lower portion 6. The housing 2 includes a pair of tape reels 10 on which a tape 8 is carried. The two tape reels 10 have the same structure, and only one of them will be illustrated for simplicity:

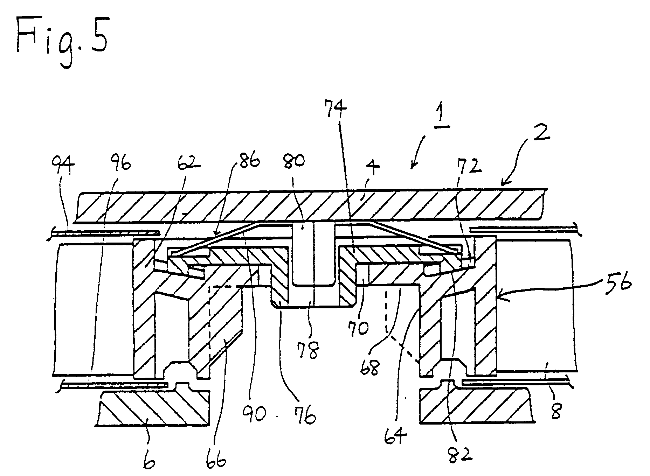

The tape reels 10 are provided with cylindrical hubs 12 around which the tape 8 is wound. The hubs 12 are disposed in opposition to a circular opening 14 produced in the lower portion 6, and are provided with a plurality of engaging pawls 16 at equal intervals along the peripheral inside wall as shown in Figure 4. The number of them is not limited to eight as in the illustrated embodiment.

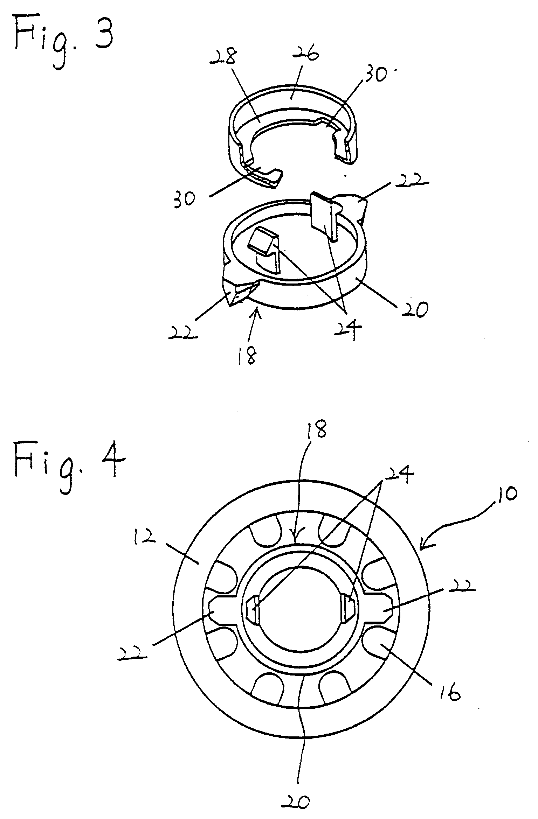

The hub 12 houses a reel locking member 18 which includes a cap-shaped member 20 and a pair of horn portions 22 diametrically projecting from the outside wall of the cap-shaped member 20. In addition, the cap-shaped member 20 is provided with upright guides 24 upright on the bottom thereof as shown in Figure 3. The upright guides 24 are diametrically aligned with the horn portions 22. The reel locking member 18 is vertically slidable within the hub 12. When the reel locking member 18 is lowered, the horn portions 22 are caused to fit loosely in the gaps between the adjacent engaging pawls 16. When the reel locking member 18 is raised, the horn portions 22 are withdrawn from the gaps. Preferably, each horn portion 22 has a wedge-shaped edge so as to facilitate the sliding of it into the gap.

Referring to Figure 3, the upper portion 4 is provided with a pair of ring-shaped supports 26 concentric with the respective cap-shaped members 20. The supports 26 project downward from the bottom of the upper portion 4, and includes a ring-shaped flange 28 along the inside periphery thereof. The ring-shaped flange 28 is provided with diametrically opposing recesses 30 which enable the upright guides 24 to fit in, thereby preventing the reel locking member 26 from rotation. Each upright guide 24 includes a bent portion whereby the upright guide 24 is prevented from disengagement from the flange 28.

The upper portion 4 includes a post 32 between leg portions 33, the post 32 projecting toward the reel locking member 18 which is normally loaded downward by a coil spring 34. The reel locking member 18 is urged downward by the spring 34, thereby enabling the horn portions 22 to fit in the gaps between the pawls 16. However, since the horn portions 22 loosely fit in the gaps, no further force of the spring 34 applies to the reel locking member 18.

Referring to Figure 1, the cassette 1 is placed in an apparatus by being maintained by a holder 36 which includes positioning pins 38 upright on a base plate 40. The base plate 40 is additionally provided with a reel shaft 42 to which a reel table 44 is rotatably mounted. The reel table 44 includes a hub portion 46 having a polygonal cross-section such as hexagonal cross-section. The reference numeral 48 denotes a disc-shaped reel driving device having a hexagonal bore in the center in which the hub portion 46 is fitted. The reel driving device 48 is upwardly loaded by a spring 50, and is prevented from being separated from the hub portion 46 by a collar 52. The reel shaft 42 is passed through the hub portion 46, and extends beyond the top surface of the collar 52. The reel driving device 48 is provided with a plurality of pawls insertable into gaps formed between the respective the engaging pawls 16. The cassette holder 36 is provided with a cassette pusher 54 which constantly urges the cassette 1 downwardly by the force of a coil spring 55 which is disposed between a lower surface of the holder 36 and a movable end portion ofthe cassette pusher 54.

The cassette 1 is normally held as shown in Figure 2; more specifically, the reel locking member 18 is pushed down by the coil spring 34, thereby placing the top ends of the guide posts 24 into engagement with the flange 28. The guide posts 24 fit in the recesses 30, and prevented from rotation, thereby stopping the reel locking member 18 from rotation. In this way, the hub portion 46, and accordingly, the tape reels 10 are prevented from rotation.

When the cassette 1 is placed in the apparatus, the cassette 1 is first held by the holder 36 and shifted to a predetermined position where the collar 52 and the reel driving device 48 are led into the cassette 1 through the circular opening 14. The cassette 1 is elastically pressed by the cassette pusher 54 against the positioning pin 38 of the base plate 40 so that the cassette 1 is properly positioned. When the collar 52 and the reel driving device 48 are inserted into the reel hub 12, the top end of the reel shaft 42 pushes the reel locking member 18 upwardly against the force of the coil spring 34. As a result, the reel locking member 18 is upwardly slid until it reaches a point above the engaging pawls 16. In this way, the horn portions 22 come out of engagement with the gaps between the adjacent engaging pawls 16. Thus, the reel hub 12 is set free from the reel locking member 18, and is ready to rotate.

At this moment, the pawls of the reel driving device 48 come into engagement with the gaps between engaging pawls 16, and the outer periphery of the collar 52 is pressed against the inner periphery of the reel hub 12 so that the hub portion 46 and the reel hub 12 are aligned with each other. Thus, the reel table 44 is put into rotation, and the rotation is transmitted to the reel hub 12 through the reel driving device 48. As a result, the reel hub 12 is rotated together with the reel table 44, thereby winding the tape 8 around one of the tape reels 10 from the other. At this stage, the reel locking member 18 is kept in abutment with the reel shaft 42 so that the reel locking member 18 is prevented from obstructing the rotation of the reel table 44.

When the cassette 1 is dismounted from the apparatus, the reel table 44 is released from engagement with the reel hub 12, and at the same time, the reel locking member 18 is pushed down under the recovering action of the coil spring 34. In accordance with the descent of the reel locking member 18, each horn portion 22 is smoothly inserted into the gaps between the engaging pawls 16 owing to its wedge-shaped top end. In this way, the reel hub 12 is prevented from rotation by the horn portions 22.

As is evident from the description, the reel locking member 18 is accommodated within the reel hub 12. As a result, the housing 2 is not required to be large enough to accommodate the tape 8. Thus, a thin cassette is achievable.

Example 2

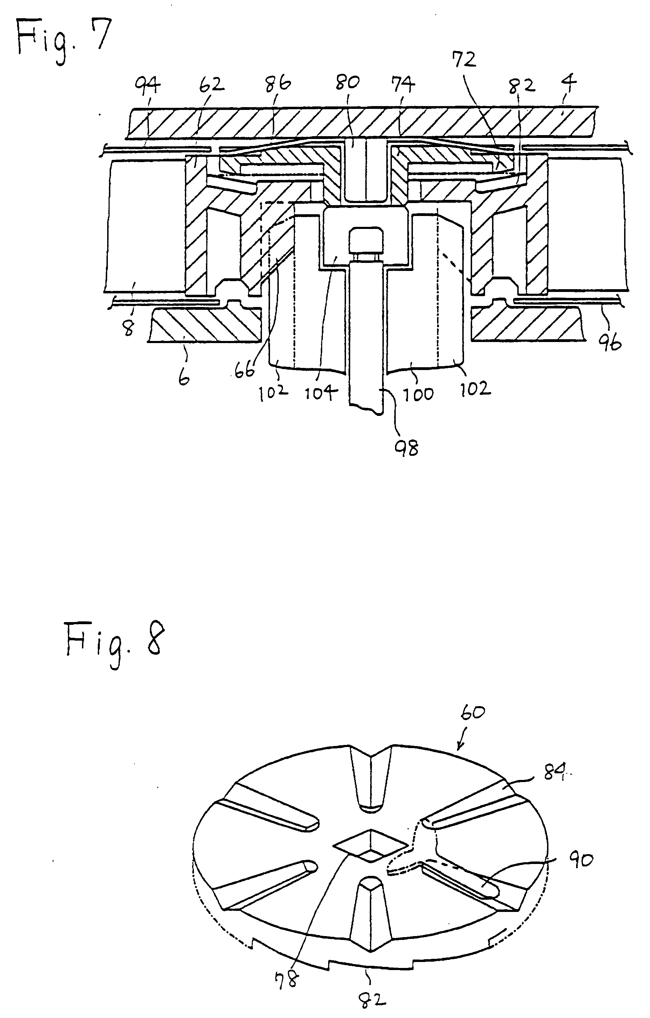

Referring to Figures 5 to 7, another example will be described. This example has different tape reels 56 and locking mechanism from those of Example 1.

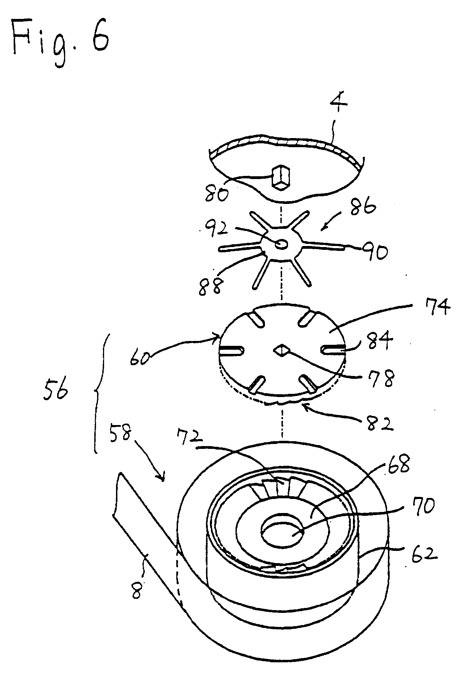

The tape reel 56 comprises a reel hub 58 and a reel locking member 60 for stopping the reel hub 58 from rotation. The reel hub 58 includes an outer ring member 62 around which the tape 8 is wound and an inner ring member 64, wherein the outer ring member 62 and the inner ring member 64 are concentric with each other. The inner ring member 64 is provided with horn portions 66 equally spaced from each other on and along its inside periphery. The top end of the reel hub 58 is generally recessed, including a central opening 70, an inner peripheral portion 68, and a raised periphery having bevel gear portion 72. As shown in Figure 6, the bevel gear portion 72 has a saw-tooth structure along the periphery in which each tooth has an inclined face to the peripheral direction, and a vertical engaging face perpendicular to the peripheral direction. The inclined face is inclined in the direction in which the tape 8 is wound. This means that the inclined faces of the bevel gears 72 of one reel hub (e.g. the supply reel hub) and the other reel hub (e.g. the take-up reel hub) are oppositely inclined.

A reel locking member 60 is disposed above the tape reel 56, the reel locking member 60 having a disc-shaped plate 74 and a boss 76 which, as shown in Figure 5 is concentrically inserted in the central opening 70. The boss 76 includes a central bore 78 having a rectangular cross-section through which a shaft 80 provided on the upper portion 4 of the housing 10 is passed. The central bore 78 has the same rectangular cross-section as that of the shaft 80. Thus, the shaft 80 fitting in the central bore is prevented from rotation but slidable in a vertical direction. The reel locking member 60 is provided with a bevel gear portion 82 having such a saw-tooth structure as to be in mesh with those of the bevel gear portion 72, wherein the inclined faces of the teeth of both bevel gear portions 72 and 82 are parallel to each other.

In addition, the disc-shaped plate 74 is radially provided with six short grooves 84 equally spaced, each groove 84 being open in the periphery of the disc-shaped plate 74 and terminating short of the central bore 78.

The shaft 80 is provided with a leaf spring 86 designed to push down the reel locking member 60. The leaf spring 86 includes a central disc portion 88 having a central aperture 92, and elastic arms 90 radially extending outward at equal distances. The shaft 80 is fixed at its proper position by fitting in the central aperture 92. The elastic arms 90 are inclined so that they can fit in the respective short grooves 84. The central disc portion 88 keeps contact with the upper portion 4 of the housing 2 as shown in Figure 5.

The reel locking member 60 is subjected to a downward pressure applied by the disc-shaped plate 88 in such a manner as to be vertically slidable, with the bevel gear portions 72 and 82 being mutually in mesh. When the bevel gear portion 82 exerts pressure on the bevel gear portion 72, the inclined faces of the bevel gear portion 72 are subjected to downward pressure, thereby causing the reel hub 58 to move in the direction of inclination. In this way the reel hub 58 is rotated in the direction in which the tape 8 is wound. When the vertical engaging faces of both bevel gear portions 72 and 82 come into engagement with each other, the reel hub 58 is stopped from rotation in the tape supplying direction.

In Figure 5, the reference numerals 94 and 96 denote an upper sheet and a lower sheet, respectively with the tape 8 wound around the reel hub 58 of the tape reel 56 in the housing 2. These sheets 94 and 96 have a central aperture which allow the reel hub 58 to pass through. The tape 8 is guided by these sheets 94 and 96 so as not to be displaced from the reel hub 58.

The cassette 1 is normally maintained at the state shown in Figure 5 where the reel locking member 60 is placed in engagement with the top surface of the reel hub 58 by the elastic arms 90 of the leaf spring 86, and the bevel gear portions 72 and 82 are mutually in mesh. The reel locking member 60 is prevented from rotation because of the shaft 80 fitting in the central bore 78, thereby enabling the reel hub 58 to rotate only in the direction in which the tape 8 is taken up or wound, and not in the direction in which the tape 8 is supplied. Thus, the tape 8 is prevented from being loosened between the reels 10.

When the cassette 1 is shifted to a predetermined position in the apparatus by the holder, a trunk portion 100 of the reel table 44 supported by a reel shaft 98 is inserted in the opening 14. The trunk portion 100 is provided with equally spaced driver edge portions 102 which come into engagement with the horn portions 66 of the inner ring member 64 when the trunk portion 100 is inserted in the reel hub 58. When the trunk portion 100 is inserted into the reel hub 58, a head portion 104 comes into engagement with the lower end portion of the boss 76, thereby pushing the reel locking member 60 upward against the leaf spring 86. In this way, the reel locking member 60 is upwardly slid along the rectangular shaft 80 without being rotated, thereby bringing the bevel gear portion 72 out of engagement with the bevel gear portion 82. As a result, the reels 10 are ready to rotate either in the tape take-up direction or the tape supply direction. At this stage, the upper sheet 94 and the lower sheet 96 are upwardly moved in accordance with the advancement of the reel table into the reel hub 58, thereby shifting the tape 8 upward. when the tape 8 reaches a predetermined height, the reel table is rotated, the driver teeth 102 come into engagement with the horn portions 66, thereby transmitting the rotation of the reel table to the reel hub 54. In this way the reel hub 58 is rotated.

In the illustrated embodiment, the leaf spring 86 and the reel locking member 60 are separate members, but it is possible to fabricate them in one piece.

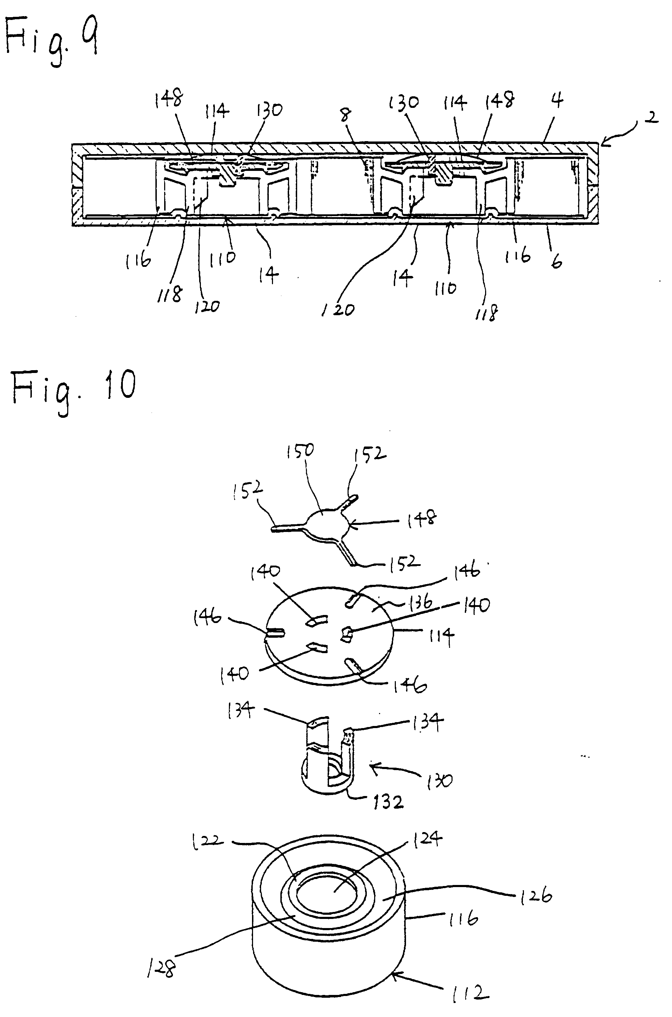

Figure 8 shows a modified version of Example 2 which is characterized in the V-shaped groove of the short grooves 84. The V-shaped grooves 84 secures the elastic arms 90 so that the reel hub 58 is prevented against rotation even if the shaft 80 is loose in the central opening 70 and fluctuates therein. Thus the tape 8 is prevented from loosening.

Example 3

Referring to Figures 9 to 11, the housing 2 of the cassette 1 also includes an upper portion 4 and a lower portion 6. The tape reels having the same structure are housed in the housing 2; hereinafter, the tape reels will be referred to as the "reel 110".

The reel 110 includes a reel hub 112 and a reel locking member 114 for preventing the reel hub 112 from rotation. The reel 110 includes an outer peripheral portion 116 around which a tape 8 is wound, and an inner peripheral portion 118 concentric of the outer peripheral portion. The inner peripheral portion 118 is provided with a plurality of equally spaced pawls 120 inwardly extending. The reel hub 112 is covered by a cover ring 122 except for a central bore 124. The outer peripheral portion 116 extends upward beyond the height of the cover ring 122 having a ring-shaped groove 126. The bottom of the ring-shaped groove 126 has an inclined surface 128 which is gradually inclined toward the central bore 124.

The central bore 124 of the reel hub 112 is designed to allow a triple-post member 130 provided on the upper portion 4 of the housing 2. The triple-post member 130 includes a ring-shaped base 132 and three posts 134 whose lower ends are fixed to the base 132 and whose upper ends are fixed to the upper portion 4 of the housing 2.

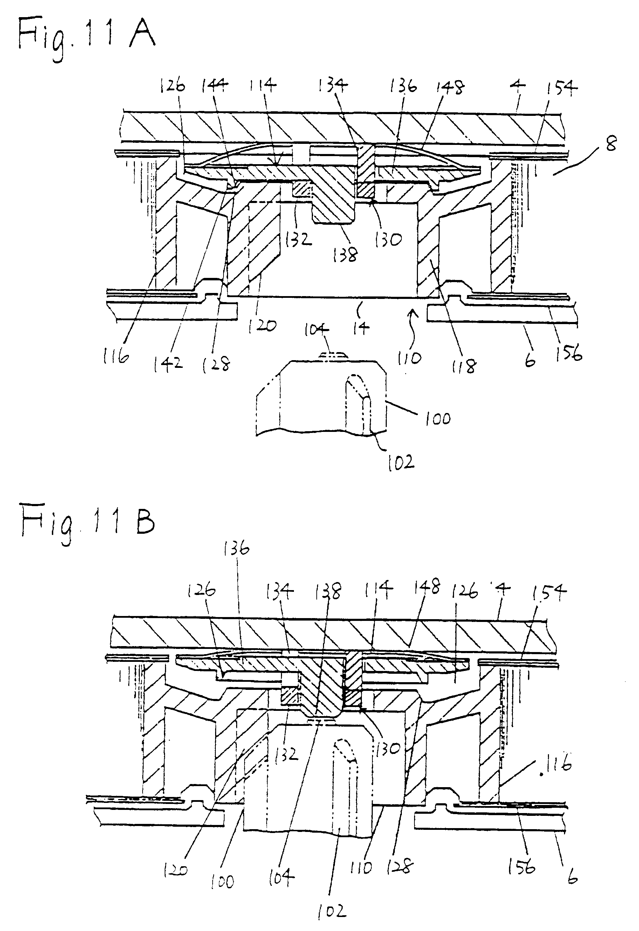

The triple-post member 130 supports the reel locking member 114 which includes a ring-shaped base plate 136 and a boss portion 138 (Figure 11A) suspended coaxially with the base plate 136. The base plate 136 is provided with three bores 140 around the boss portion 138 in which the posts 134 are relatively tightly fitted. In this way the reel locking member 114 is prevented from rotation but slidable along the posts 134. The base plate 136 of the reel locking member 114 is prevented from coming out of engagement with the posts 134.

As shown in Figure 11A, the base plate 136 is provided with a ring-shaped engaging rib 142 concentric with the boss portion 138. The engaging rib 142 has an inclined surface 144 which is parallel with the inclined surface 128 of the ring-shaped groove 126.

The base plate 136 is provided with three short grooves 146 which are open in the periphery of the base plate 136. The reel locking member 114 is downwardly loaded by a leaf spring 148 fitted in the gap surrounded by the three posts 134 disposed above the reel locking member 114. The leaf spring 148 includes three equally spaced elastic arms 152 and a central portion 150 placed on the three posts 134 so that the leaf spring 148 is placed into engagement with the upper portion 4 of the housing 2. In this situation, the elastic arms 152 extend beyond between the adjacent posts 134. The leaf spring 148 is generally bent so that the elastic arms 152 come into engagement with the short grooves 146.

As shown in Figure 11A, the housing 2 houses an upper sheet 154 and a lower sheet 156 with the tape 8 therebetween.

The cassette 1 is normally held as shown in Figure 11A. More specifically, the reel locking member 114 is pushed down by the elastic arms 152 of the leaf spring 148, thereby placing the cassette 1 in engagement with the top surface 122 of the reel hub 112. The inclined surface 144 of the engaging rib 142 come into contact with the inclined surface 128 of the reel hub 112. Since the reel locking member 114 is prevented from rotation by the triple-post member 130, the reel hub 112 is also prevented from rotation even though it is pushed by the reel locking member 114. Thus, the tape 8 is protected from inadvertent unwinding.

When the cassette 1 is shifted to a predetermined position in the apparatus by the holder 36, the trunk portion 100 of the reel table is caused to enter the opening 14 of the lower portion 6 of the housing 2, thereby bringing the driver edge portions 102 with the pawls 120. In accordance with the further advancement of the trunk portion 100 into the reel hub 112, the head portion 104 comes into engagement with the lower end of the boss portion 138, thereby raising the reel locking member 114 against the leaf spring 138. In this way, the reel locking member 114 supported by the triple-post member 130 is upwardly slid without rotation along the posts 134, thereby separating the inclined surfaces 144 from the inclined surfaces 128 of the reel hubs 112. As a result, the reel hub 112 is ready to rotate. The rotation of the reel hubs 112 is transmitted to the reels 110, thereby causing the tape 8 to run from one reel to the other.

In the illustrated embodiment, the leaf spring 148 is fabricated independently of the reel locking member 114, but they can be made in one piece.

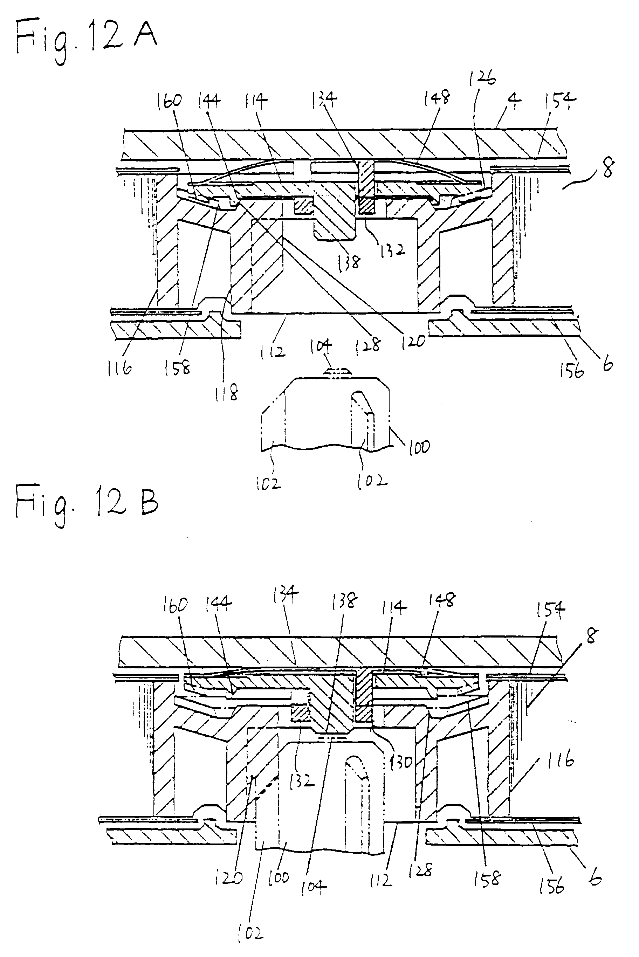

Figures 12A and 12B show a modification to Example 3, where gears 158 are formed in the ring-shaped groove 126, and gears 160 are formed on a lower peripheral surface of the ring-shaped base plate 136 so that these gears 158 and 160 are mutually in mesh. Under this structure, the engagement of the inclined surfaces 144 and 128, and the meshing of the gears 140 and 158 control the rotation of the reel hubs 112.

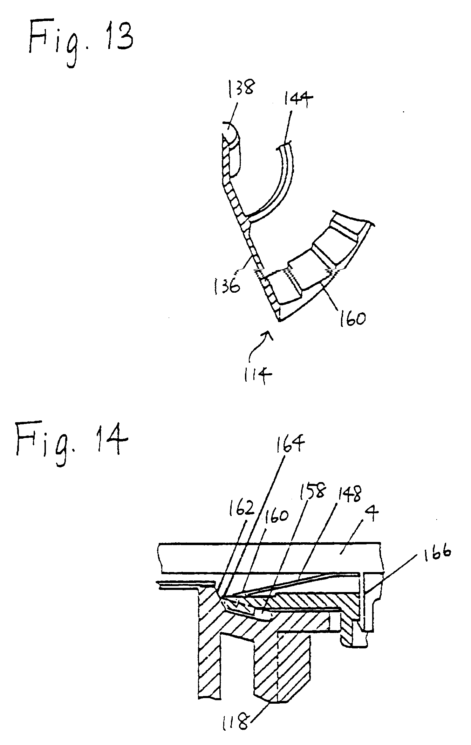

It is possible to modify the tooth shape of the gears 160 as shown in Figure 13, that is, a saw-tooth shape as that of the bevel gear portions 82 in Example 2. It is also possible to shape the teeth of the gears 158 in the same manner as the bevel gear portions 72 in Example 2.

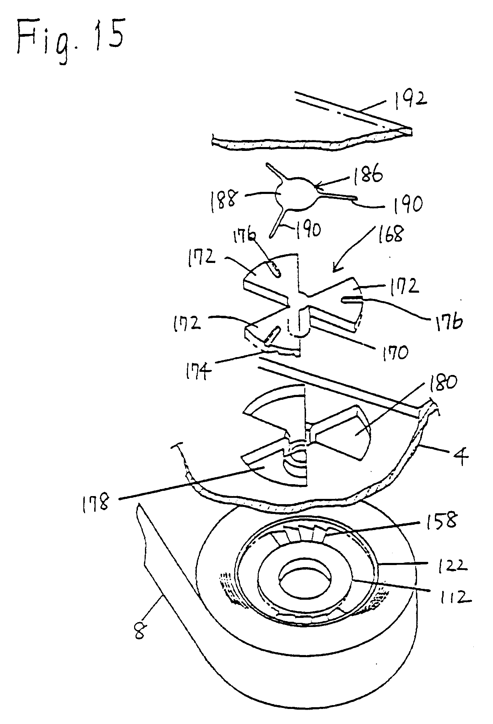

Figure 14 shows a further modification in which an inclined surface 152 is formed on the outer peripheral surface of the ring-shaped groove 126, and an inclined surface 164 is formed on the outer peripheral surface of the ring-shaped base portion 136 so that the two inclined surfaces 162 and 164 come into contact with each other. Instead of using the triple-post member 130, the reel locking member 114 can be constituted by a plurality of supporting arms 166 having pawls at the lower end, and the boss portion 138 can be hollow. The supporting arms 166 are flexible at their lower end portions, and can be easily fitted in the boss portion 138.

Example 4

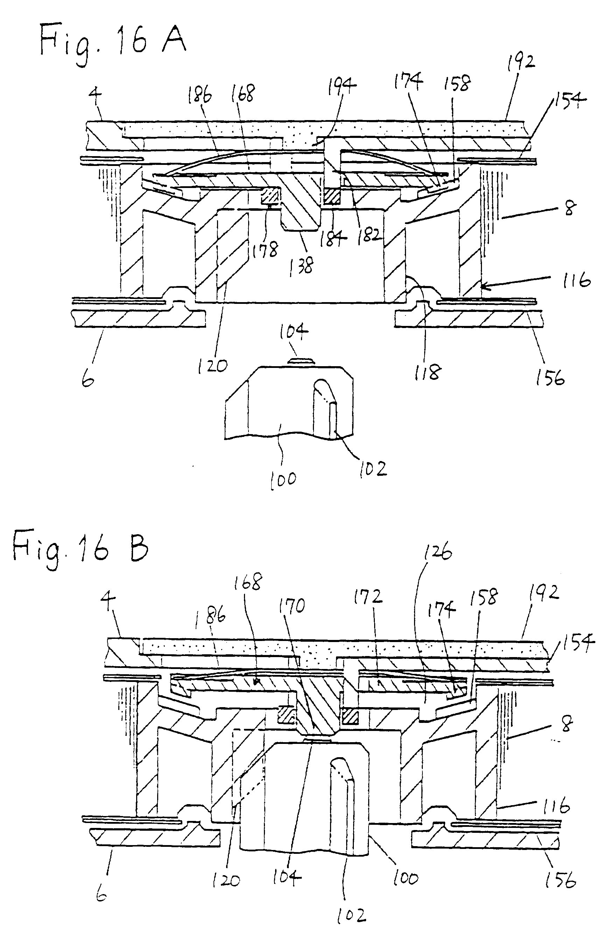

Referring to Figures 15, 16A, and 16B, a fourth example will be described:

As referred to above, the gears 158 are formed on the surface of the ring-shaped groove 126, the gears having saw-shaped teeth. The outer peripheral surface and the inner peripheral surface are perpendicular to each other. The reel locking member 168 includes a pillar boss 170 and three sectors 172 radially extending outward from the pillar boss 170. The sectors 172 are horizontally and equally spaced from each other, and have saw-tooth gears 174 on the under-surface thereof. Each tooth of the gears 174 is shaped as shown in Figure 13 so that the reel hubs 112 are rotated only in one direction, that is, in the direction in which the tape 8 is wound. The sectors 172 are provided with radial short grooves 176.

The upper portion 4 of the housing 2 includes apertures 180 through which the sectors 172 of the reel locking member 168 are passed in the horizontal position. The upper portion 4 of the housing 2 includes a support portion 178 which includes three posts 182 and a ring-shaped base 184 as the triple-post member 130 shown in Figure 10. The pillar boss 170 of the reel locking member 168 is fitted in the opening by the posts 182. In this way the reel locking member 168 is prevented from rotation but slidable upward along the posts 182. A leaf spring 186 is placed on the reel locking member 168. The leaf spring 186 includes three equally spaced elastic arms 190 and a central portion 188. The elastic arms 190 extend through between the adjacent posts 182 and come into engagement with the short grooves 176.

The reference numeral 192 denotes a transparent cover for covering a thin portion of the upper portion of the housing 2 as shown in Figure 16A. The transparent cover 192 is provided with a boss 194 adapted to come into engagement with the central portion 188 as shown in Figure 16A. The top surface of the transparent cover 192 is flush with that of the upper portion 4 of the housing 2.

The cassette 1 is normally held as shown in Figure 16A. More specifically, the reel locking member 168 is pushed down by the leaf spring 148, thereby placing the gears 174 in engagement with the gears 158 of the reel hub 112. As a result, the reel hubs 112 are rotated only in one direction, that is, in the direction in which the tape 8 is wound. Thus the tape 8 is protected against becoming loose. When the cassette 1 is placed on the apparatus, the trunk portion 100 of the reel table is led into the reel hub 112, and the driver edge portions 102 come into engagement with the engaging pawls 120. At this moment, the reel locking member 168 is raised against the leaf spring 186, thereby releasing the gears 174 from the gears 158. In this way the reel hubs 112 are rotated, thereby enabling the tape 8 to run.

It is understood that various other modifications will be apparent to and can be readily made by those skilled in the art without departing from the scope and spirit of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

**Claims**

1. A tape cassette comprising:
   a housing;
   a pair of tape reels housed in the housing, each tape reel comprising a reel hub for carrying a magnetic tape, the reel hub having an engaging means for engagement with a driving means when the cassette is placed in the apparatus, and a reel locking member disposed in the reel hub;
   wherein the housing comprises a support means for supporting the reel locking member in a non-rotatable but vertically slidable manner;
   a loading means for loading the reel locking member downward; and
   an engaging means disposed in the reel locking member so as to place the reel locking member into engagement with the reel hub.

2. A tape cassette according to claim 1, wherein the engaging means of the reel hub comprises a plurality of equally spaced pawls projected inward from the periphery of the reel hub, and wherein the engaging means comprises an engager insertable into gaps between the adjacent pawls.

3. A tape cassette according to claim 2, wherein the support means comprises a cylindrical body having a flange inwardly extended from the inner side wall thereof and wherein the reel locking member comprises a plurality of broken parts formed so as to allow a post formed in the reel locking member, thereby preventing the rotation of the reel locking member but allowing the vertical movement thereof.

4. A tape cassette according to claim 1, wherein the loading means comprises a coil spring disposed between the top surface of the housing and the reel locking member.

5. A tape cassette according to claim 1, wherein each of the reel hubs comprises an inner ring-shaped body and a second inner ring-shaped body, and a top portion in opposition to the reel locking member.

6. A tape cassette according to claim 1, wherein the engaging means comprises a first group of gears formed on the reel hub and a second group of gears formed on the reel locking member, the first group of gears and the second group of gears being mutually engageable.

7. A tape cassette according to claim 6, wherein the gears of the first and second groups are bevel gears having inclined faces.

8. A tape cassette according to claim 7, wherein the gears comprise saw-shaped teeth, each tooth including an inclined face and a vertical engaging face so that when they are in mesh, the reel hubs being rotated only in one direction.

9. A tape cassette according to claim 5, wherein the reel locking member comprises a central bore having a rectangular cross-section and wherein the support means comprises a shaft having a rectangular cross-section corresponding to that of the central bore of the reel locking member so as to enable the shaft to fit in the central bore in a non-rotatable but vertically slidable manner.

10. A tape cassette according to claim 5, wherein the loading means is a leaf spring disposed between the top surface of the housing and the reel locking member.

11. A tape cassette according to claim 5, wherein the reel hub comprises a ring-shaped groove in the top surface thereof, and the reel locking member comprises an engaging rib adapted to fit in the ring-shaped groove, and wherein the engaging means comprises an inclined face engageable with the ring-shaped groove, the engaging rib comprising an inclined face engageable with the inclined face of the engaging means.

12. A tape cassette according to claim 11, wherein the engaging means comprises a first gear portion disposed in the ring-shaped groove, and a second gear portion disposed in the reel locking member so as to be in mesh with each other.

13. A tape cassette according to claim 11, wherein the gear portion in the ring-shaped groove is formed on an inclined bottom thereof.

14. A tape cassette according to claim 13, wherein each of the gears comprises a saw-shaped tooth, each tooth having an inclined face and an upright engaging face, the meshing of the gear faces ensuring the rotation of the reel hubs only in one direction.

15. A tape cassette according to claim 5, wherein the support means comprises a plurality of supporting arms upright on the top surface of the housing, and a plurality of ring-shaped support horizontally secured to the respective supporting arms, and wherein the reel locking member comprises bores for allowing the supporting arms to pass through and a trunk portion adapted to enter an opening of the ring-shaped support.

16. A tape cassette according to claim 15, wherein the reel locking member comprises two portions divided in the peripheral direction in opposition to the top surface of the reel hub.

17. A tape cassette according to claim 16, wherein the engaging means comprises a ring-shaped gear formed on the top surface of the reel hub, and gears formed on each of the divided portions of the reel locking member.

18. A tape cassette according to claim 17, wherein the divided portions of the reel locking member are located between the adjacent supporting arms so as to prevent the reel locking member from rotation.

19. A tape cassette according to claim 18, wherein the housing comprises an opening on the top surface through which the divided portions are passed at one time.

20. A tape cassette according to claim 19, wherein the opening on the top surface of the housing is covered by a cover.

21. A tape cassette according to claim 17, wherein gears comprise saw-shaped teeth, each tooth including an inclined face and an upright face, and the meshing of the gears ensures that the reel hubs are rotated only in one direction.

Fig. 1

Fig. 2

Fig. 3

Fig. 4

Fig.5

Fig. 6

Fig. 7

Fig. 8

Fig. 9

Fig. 10

Fig. 11 A

Fig. 11 B

Fig. 12 A

Fig. 12 B

Fig. 13

Fig. 14

Fig. 15

Fig. 16 A

Fig. 16 B

Fig. 17    PRIOR ART

Fig. 18    PRIOR ART

European Patent
Office

**EUROPEAN SEARCH REPORT**

Application Number

EP    91 12 0564

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IBM TECHNICAL DISCLOSURE BULLETIN<br>vol. 28, no. 10, March 1986,<br>page 4552; 'CARTRIDGE REEL BRAKE' | 1,4 | G11B23/087 |
| A | * page 4552, line 7 - line 30; figure 1 * | 5,6 | |
| X | EP-A-0 070 616 (TECHNICOLOR, INC) | 1,6,7 | |
| A | * page 10, line 3 - page 11, line 11 *<br>* page 12, line 11 - page 13, line 21; figures 7,13 * | 2,4,5,8 | |
| A | PATENT ABSTRACTS OF JAPAN<br>vol. 9, no. 207 (P-382)(1930) 24 August 1985<br>& JP-A-60 069 875 ( SONY K.K. ) 20 April 1985<br>* abstract * | 1 | |
| A | GB-A-2 099 399 (FUTURE TECHNOLOGY LABORATORIES INC.)<br>* page 2, line 17 - line 59; figures 3,4 * | 1 | |
| | ----- | | **TECHNICAL FIELDS SEARCHED (Int. Cl.5)**<br><br>G11B |

The present search report has been drawn up for all claims

| Place of search | Date of completion of the search | Examiner |
|---|---|---|
| BERLIN | 07 FEBRUARY 1992 | CHAUMERON B. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................

& : member of the same patent family, corresponding
    document

EPO FORM 1503 03.82 (P0401)